# EUROPEAN PATENT APPLICATION

(11) **EP 1 387 258 A2**
(43) Date of publication of application: **04.02.2004**
(21) Application number: 03291922.7
(22) Date of filing: 30.07.2003
(51) Int. Cl.: G06F 9/38

(54) **Processor-processor synchronization**

(30) Priority: 31.07.2002 US 400391 P
(71) Applicant: Texas Instruments Incorporated, Dallas, Texas 75251 (US); Texas Instruments France, 06271 Villeneuve Loubet Cedex, Nice (FR)
(72) Inventor: Chauvel, Gerard, 06600 Antibes (FR); Lasserre, Serge, 83600 Frejus (FR)
(74) Representative: Holt, Michael

(57) **Abstract**

A first processor executes a transaction targeting a pre-determined address, wherein the transaction is detected by a wait unit that asserts a wait signal to cause the first processor to enter a wait mode. The wait signal is de-asserted when the wait unit receives a signal from another processor or when a system interrupt occurs.

## Description

The present invention relates generally to processors and more particularly to a synchronized processing system.

Many types of electronic devices are battery operated and thus preferably consume as little power as possible. An example is a cellular telephone. Further, it may be desirable to implement various types of multimedia functionality in an electronic device such as a cell phone. Examples of multimedia functionality may include, without limitation, games, audio decoders, digital cameras, etc. It is thus desirable to implement such functionality in an electronic device in a way that, all else being equal, is fast, consumes as little power as possible and requires as little memory as possible. Improvements in this area are desirable.

### BRIEF SUMMARY OF THE PREFERRED EMBODIMENTS

As disclosed herein, a system includes a first processor and a second processor coupled to "wait" logic. The first processor initiates a transaction targeting a pre-determined address and the wait logic, which may be external to the first processor, detects the transaction and asserts an interruptible wait signal to the first processor. The wait signal may be interrupted by asserting a signal from a second processor or asserting a system interrupt signal from the first processor to the wait logic. In accordance with at least some embodiments of the invention, the second processor may initiate a software application, while the first processor is placed in a wait state. When the second processor requires the help of the first processor to execute an instruction, the first processor is activated to execute the instruction, and may then return to a wait state by clearing the wait or sending an interrupt to the first processor if the wait is already cleared.

Other embodiments may include a system interrupt that allows the first processor to be activated from a wait state, such that an interrupt service routine, e.g., memory allocation or de-allocation, is executed by the first processor, while the second processor executes another application. In such embodiments, the first processor may check the status of the second processor after completing the interrupt service routine and before returning to a wait state. If the second processor requires the help of the first- processor to execute an instruction as previously described, the first processor executes the instruction for the second processor before returning to a wait state.

### NOTATION AND NOMENCLATURE

Certain terms are used throughout the following description and claims to refer to particular system components. As one skilled in the art will appreciate, semiconductor companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...". Also, the term "couple" or "couples" is intended to mean either an indirect or direct connection. Thus, if a first device couples to a second device, that connection may be through a direct connection, or through an indirect connection via other devices and connections.

### BRIEF DESCRIPTION OF THE DRAWINGS

For a more detailed description of the preferred embodiments of the present invention, reference will now be made to the accompanying drawings, wherein:
Figure 1 shows an exemplary implementation of the preferred embodiment in the form of a wireless communication device (e.g., cell phone);
Figure 2a shows a diagram of a system in accordance with an embodiment of the invention;
Figure 2b shows another diagram of a system in accordance with an embodiment of the invention;
Figure 3 shows a block diagram of the wait unit used in the systems of Figures 2a and 2b; and
Figure 4 shows a flowchart illustrating a preferred method of synchronizing multiple processors.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

The subject matter disclosed herein generally relates to processing systems that use a plurality of processors. The use of multiple processor may provide a variety of benefits such as faster processing, greater throughput, multi-tasking, and the like, but also may require a more complex control scheme than systems that use a single processor. In particular, the disclosure relates to synchronizing or otherwise coordinating the operation of two or more programmable electronic devices such as processors to permit efficient switching and/or multi-tasking between the processors.

In at least some embodiments, one or more of the processors described herein may be particularly suited for executing Java□ Bytecodes or comparable code. The Java suited processor described herein may be used in a wide variety of electronic systems and will hereafter be referred to as a stack-based processor or Java Stack Machine ("JSM"). Another of the processors described herein is referred to as a main processor unit ("MPU"), and may comprise any suitable processor now known or later developed. By using the JSM in combination with the MPU, many Java instructions can be quickly executed using the JSM, while at least some Java and other instructions are executed by the MPU. Further information regarding the JSM and the MPU may be found in one or more of the documents referenced above.

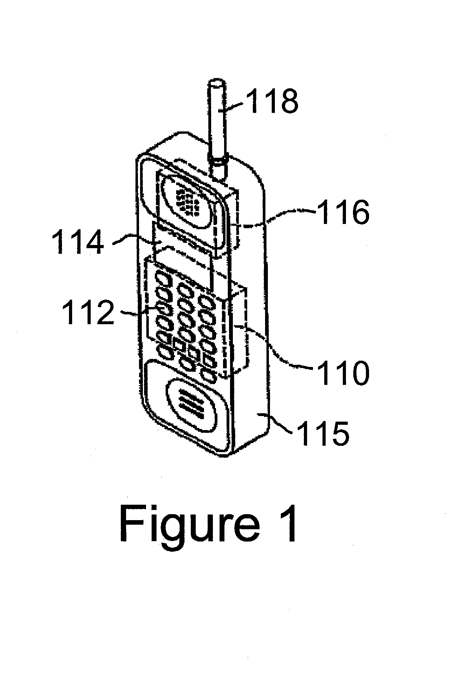

In at least some embodiments, the processors may be coupled together and used to operate a portable, battery-operated communication device such as a cell phone. As shown in Figure 1, for example, a cell phone may comprise an integrated keypad 112, display 114, and outer case 115. Electronic components and software including at least some of the components disclosed herein, may be included in electronics package 110 connected to the keypad 112, display 114, and radio frequency ("RF") circuitry 116. The RF circuitry 116 may be connected to an antenna 118.

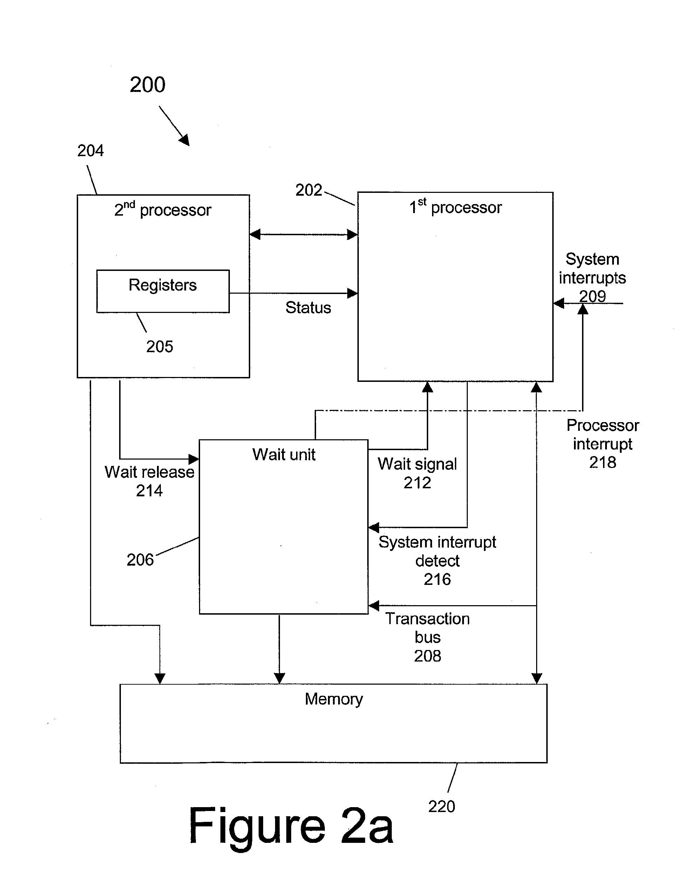

Referring now to Figure 2a, a system 200 for synchronizing the operation of multiple processors is shown in accordance with a preferred embodiment of the invention. As shown, the system 200 may comprise a first processor 202, a second processor 204, a wait unit 206, a transaction bus 208, memory 220, and a variety of signals such as a wait signal 212, a wait release 214, system interrupts 209, a system interrupt detect signal 216, and a processor interrupt 218. Other components (not shown) may be included as well.

In operation, the first processor 202 performs memory accesses through a transaction bus 208 to memory 220. These accesses may include read or write cycles targeting various locations in memory 220. The transaction bus 208 preferably is also provided to wait unit 206, thereby permitting the wait unit 206 to monitor the transactions being performed between the first processor 202 and memory 220. More specifically, the wait unit 206 preferably determines the memory address of various transactions targeting memory 220.

In accordance with the preferred embodiments, at least one address (or a range of addresses) is selected or otherwise pre-determined to be used to place the first processor 202 in a "wait" mode. The wait mode is generally specific to the particular processor selected as processor 202 and may include a lower performance or lower power mode in which, for example, one or more clocks internal to the processor 202 are disabled. The pre-determined address preferably is mapped to a physical memory location and thus can be used as a mechanism for initiating the first processor's transition to the wait mode. To initiate the transition to the wait mode, the first processor 202 performs a read or write access targeting the address pre-determined for use for this purpose. As such, when the wait unit 206 detects an access on transaction bus 208, the wait unit 206 determines whether the access is for the pre-determined address. The wait unit 206 responds to the detection of the access having the pre-determined address by asserting wait signal 212 to the first processor 202.

In another embodiment, instead of mapping this transaction to a physical address, the transaction could be mapped on a dedicated communication bus (i.e., a co-processor bus) between the first processor 202 and the second processor 204, whereby a transaction to the specific address of the communication bus or a specific command on the communication bus performs the same function as addressing a physical memory address

While the first processor 202 is in a wait mode, the second processor 204 may execute instructions or otherwise be occupied. The second processor 204 may encounter an instruction that requires support from, or at least benefits from support by, the first processor 202. Accordingly, the second processor 204 may assert a wait release signal 214 to the wait unit 206, thereby causing the wait unit 206 to de-assert the wait signal 212. Once the wait signal 212 is de-asserted as described below, the first processor 202 can execute the instruction for which the second processor 204 needed support.

In at least some embodiments, upon "waking up," the first processor 202 preferably requests a status from the second processor 204. The status may include, without limitation, one or more status bits of a register 205 that indicate whether the second processor 204 is actively executing instructions and identify any instruction(s) that the first processor 202 is to execute.

In addition to being awoken by the assertion of the wait release signal 214 by the second processor 204, the first processor 202 may be awoken by a system interrupt 209. The system interrupt 209 may be sent to the first processor 202, which asserts a system interrupt detect signal 216 to the wait unit 206 to cause the de-assertion of the wait signal 212. The system interrupt 209 may be sent by a variety of system components (not shown), for example, I/O devices, timers, etc., to allow the first processor 202 to carry out, for example, routine maintenance, such as memory allocation and de-allocation, and other operations as desired.

After finishing the task prompted by the system interrupt 209, the first processor 202 may read the status of the second processor 204. If the second processor 204 is in an idle state (i.e., the second processor 204 is not actively executing instructions), the first processor 202 may execute one or more instructions one behalf of the second processor 204. As previously described, the second processor 204 may encounter an instruction that requires, or at least benefits from, the support of the first processor 202. Thus, this instruction may be executed by the first processor 202. If the second processor 204 is not in an idle state, the first processor 202 may transition to a wait mode as previously described (i.e., by executing a memory access to a pre-determined address detectable by the wait unit 206).

In at least some embodiments of the invention, the first processor 202 may prioritize multiple tasks when awake. For example, if the first processor 202 has been awoken by a system interrupt 209, the first processor in not limited to performing the task for which the system interrupt 209 was asserted (i.e., when awake, the first processor 202 may perform other tasks upon request according to a pre-determined priority). In at least some embodiments, an operating system ("O/S") running of the first processor 202 may control the order in which the first processor 202 carries out multiple requests.

In some situations, for example, when a system interrupt 209 has awoken the first processor 202 as described above, the second processor 204 may be unaware that the first processor 202 has awoken. In this situation the second processor 204 may assert the wait release signal 214 as described above to obtain processing support from the first processor 202. Assertion of the wait release signal in this context causes the wait unit 206 to assert a processor interrupt signal 218 to the first processor 202. The asserted processor interrupt signal 218 preferably causes the first processor to temporarily stop executing a task, e.g. a routine maintenance task initiated upon occurrence of a system interrupt 209, to execute instructions as requested by the second processor 204. In other embodiments, the processor interrupt signal 218 is not used and any request by the second processor 204 is handled after the first processor 202 has finished the task(s) initiated by a system interrupt 209.

In embodiments in which multiple signals (e.g. system interrupt 209, system interrupt detect 216, wait release 214) occur simultaneously, approximately simultaneously, or concurrently, the operating system ("O/S") running on the first processor 202 may decide, according to a pre-determined priority, whether the first processor 202 will execute instructions as requested by the second processor 204 or execute the task(s) requested by the system interrupt 209. As shown in Figure 2a, the processor interrupt signal 218 asserted by the wait unit 206 as described above may be received by the first processor 202 as a system interrupt 209 and handled according to a pre-determined priority. More specifically, the embodiment described above enables the O/S running on the first processor 202 to schedule multiple types of support requests from the second processor 204 relative to their respective priority as compared to other requests (e.g., system interrupts 209) handled by the first processor. Some of the support requests from the second processor 204 may have lower priority than some system interrupts 209, while other support requests from the second processor 204 have a higher priority. The priority of a support request from the second processor 204 may be included in the status read by the first processor 202 as described above.

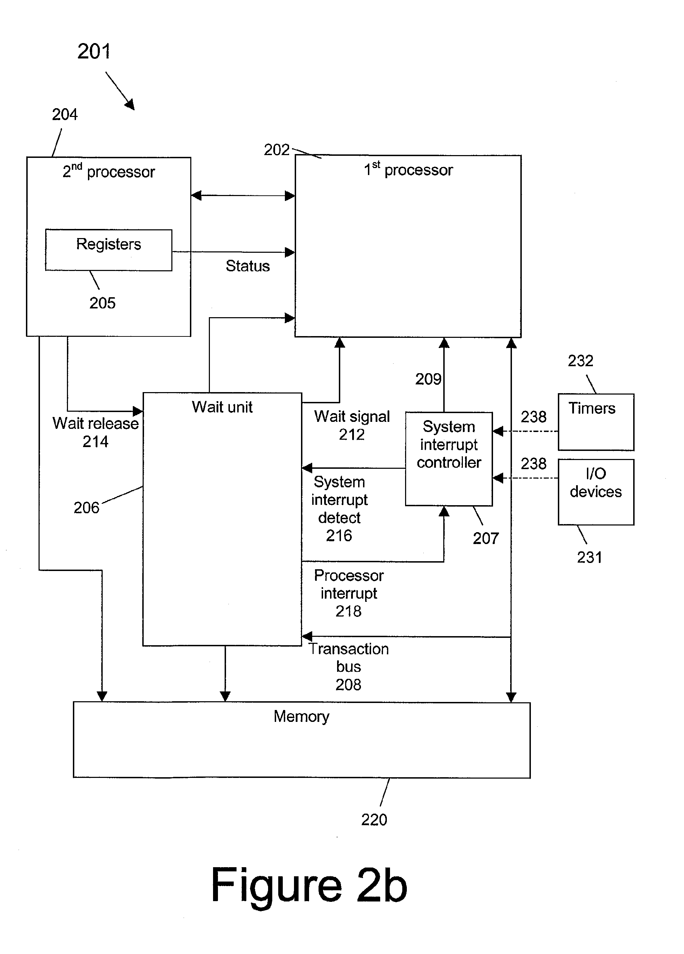

Figure 2b is a diagram of another system according to an embodiment of the invention. As shown in Figure 2b, system 201 comprises the same components and signals as system 200 of Figure 2a, with the addition of a system interrupt controller 207. The system interrupt controller 207 preferably receives the processor interrupt signal 218 from the wait unit 206 and request signals 238 from system components (e.g., I/O devices 231, timers 232, or other devices), and asserts the system interrupt detect 216 signal to the wait unit 206 and the system interrupt signal 209 to the first processor 202. The function of the components and signals of system 201 is otherwise described above for system 200.

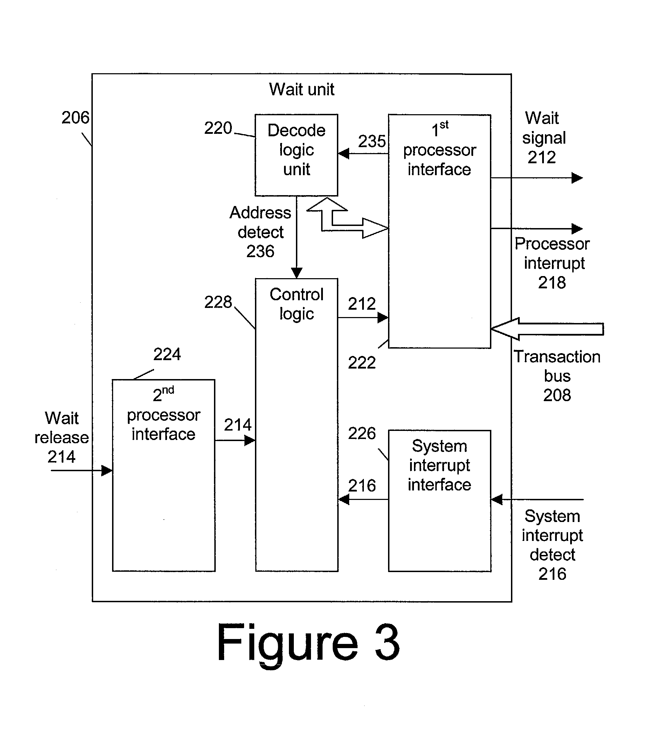

Figure 3 is a block diagram illustrating an embodiment of the wait unit 206. As shown in Figure 3, the wait unit 206 may comprise a decode logic unit 220, a first processor interface 222, a second processor interface 224, a system interrupt interface 226, and control logic 228. The control logic 228 preferably couples to the first processor interface 222, the second processor interface 224, and the system interrupt interface 226 as shown. Transaction information 235 (e.g., address, clock, or other information as may be helpful to detect that a transaction has been or is in the processor of being made) received through transaction bus 208 preferably is provided by the first processor interface 222 to the decode logic unit 220.

The decode logic unit 220 detects a transaction targeting a pre-determined address that is initiated by the first processor as described above. For example, if the transaction is detected by recognizing that a pre-determined address has been or is to be accessed, the decode logic unit 220 may assert an address detect signal 236 to the control logic 228 when the transaction bus address matches the pre-determined address or falls within a pre-determined range of addresses. Upon detecting the assertion of the address detect signal 236, control logic 228 preferably asserts the wait signal 212 which is propagated via the first processor interface 222 to the first processor as described above.

Referring still to Figure 3, the second processor interface 224 may be used to receive a wait release signal 214 from a second processor as explained above. The second processor interface 224 may then propagate the wait release signal 214 to the control logic 228. If the wait signal 212 is already de-asserted when a wait release signal 214 is received, a processor interrupt signal 218 may be asserted. More specifically, the processor interrupt signal 218 may assert or de-assert according to the state of the address detect signal 236 and/or system interrupt detect signal 216. As explained above, the processor interrupt 218 may permit a first processor to temporarily stop executing a task, in order to execute one or more instructions for a second processor.

The system interrupt interface 226 receives the system interrupt detect signal 216 from the first processor or system interrupt controller and propagates the system interrupt detect signal 216 to the control logic 228. The control logic 228 may assert or de-assert a wait signal 212 according to the state of the wait release signal 214, system interrupt detect 216, and address detect signal 236. Additionally, the control logic 228 may assert a processor interrupt signal 218 according to the state of the wait release signal 214 and the wait signal 212. As previously described, the assertion and de-assertion of the wait signal 212 causes a processor to enter or wake up from a wait mode. In at least some embodiments, the control logic 228 may receive inputs, e.g., system interrupt detect 216, address detect signal 236, wait release signal 214, etc., and accordingly asserts or de-asserts the wait signal 212.
The wait unit 206 may be used in combination with the JSM and MPU processors described above. As such, the wait unit 206 may function to synchronize the operation of the JSM and MPU to permit efficient switching between such processors. The wait unit 206 shown in as a separate unit in Figures 2a and 2b, may be included as part of the second processor 204 is some embodiments of the invention.

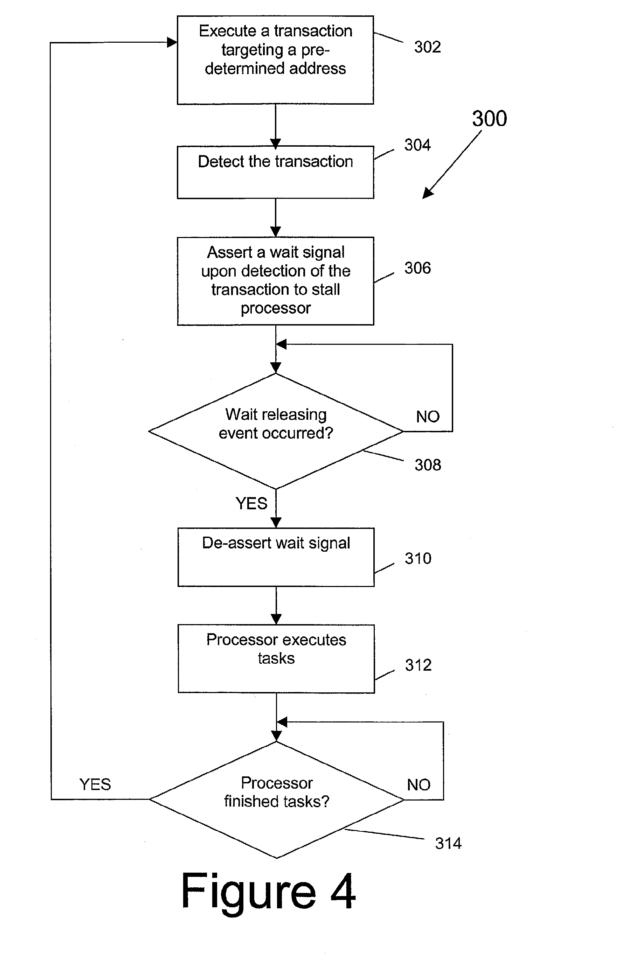

Figure 4 is a flowchart illustrating a preferred method of synchronizing multiple processors. As shown in Figure 4, the method 300 may begin at block 302 when a first processor executes a transaction targeting a pre-determined address. In 304, the transaction is detected, and at 306 a wait signal stalling the first processor 202 is asserted upon detection of the transaction. If a wait releasing event does not occur, control loops back to decision block 308. If, at 308 a wait releasing event does occur, the wait signal is de-asserted (block 310). After the wait signal is de-asserted, the processor may execute one or more tasks (block 312). Block 312 may include the first processor 202 executing tasks as requested by a second processor 204 and tasks requested by an O/S running on the first processor 202. If the tasks are completed as determined in decision block 314, control loops back to block 302 in which the processor executes a transaction targeting a pre-determined address, and the method 300 is repeated.

In a preferred embodiment, the method 300 can repeat (as shown) in order to allow continuous synchronization of multiple processors. In at least some embodiments, the wait releasing events may comprise a wait release signal from another processor or a system interrupt as previously described. Further, the detection of a transaction and the assertion/de-assertion of the wait signal may be controlled by a wait unit as previously described.

While the preferred embodiments of the present invention have been shown and described, modifications thereof can be made by one skilled in the art without departing from the spirit and teachings of the invention. For example, the wait unit described in Figure 3 may use a counter (not shown) to determine when a transaction targeting a pre-determined address is being executed. In such embodiments, the transaction would not be completed when the second processor is busy executing instructions. Accordingly, a counter may count clock cycles and if a pre-determined threshold of clock cycles is passed, e.g., 10 clock cycles, the wait unit asserts the wait signal to place the first processor in a wait state. As described above, the wait state is ended when a second processor makes a request or a system interrupt occurs. Additionally, the wait release signal 214 and processor interrupt signal 218 may each comprise a plurality of signals according to a variety of priority levels of requests as described above.

The embodiments described herein are exemplary only, and are not intended to be limiting. Many variations and modifications of the invention disclosed herein are possible and are within the scope of the invention. Accordingly, the scope of protection is not limited by the description set out above. Each and every claim is incorporated into the specification as an embodiment of the present invention.

## Claims

1. A system, comprising:
a first processor that executes a transaction targeting a pre-determined address;
a second processor coupled to said first processor; and
a wait unit coupled to said first and second processors, said wait unit detects said pre-determined address and asserts a wait signal to cause said first processor to enter a wait mode.

2. The system of claim 1 wherein the wait signal is de-asserted to permit the first processor
to retrieve a status of the second processor.

3. The system of claim 2 wherein said status includes one or more instructions that the first processor is to execute.

4. The system of any preceding claim wherein said transaction comprises a read instruction.

5. The system of any preceding claim wherein said transaction comprises a write instruction.

6. The system of any preceding claim wherein said wait unit de-asserts the wait signal upon detection of
a system interrupt signal generated by the first processor.

7. The system of any preceding claim wherein said wait unit de-asserts the wait signal upon detection of a signal from said second processor.

8. The system of claim 7 wherein said wait unit upon detection of said signal asserts a processor interrupt signal to the first processor if the wait signal is already de-asserted.

9. A method, comprising:
executing a transaction that targets a pre-determined address;
detecting the transaction to said pre-determined address;
asserting a wait signal upon detection of the transaction to cause a processor to stall;
causing said wait signal to de-assert upon occurrence of an
event, said de-assert
controlled by logic external to said processor.

10. The method of claim 9 wherein said stall comprises a low power mode.

11. The method of claim 9 or claim 10 wherein said event comprises a system interrupt.

12. The method of claim 9, claim 10 or claim 11 wherein said event comprises a signal from another processor.

13. The method of any of claims 9-12 wherein said transaction is a read instruction to said pre-determined address.

14. The method of any of claim 9-13 wherein said transaction is a write instruction to said pre-determined address.
